# FASCICULE DE BREVET EUROPEEN

(11) **EP 0 603 085 B1**
(45) Date de publication et mention de la délivrance du brevet: **12.03.1997**
(21) Numéro de dépôt: 93403093.3
(22) Date de dépôt: 17.12.1993
(51) Int. Cl.: B60S 1/16, F16F 7/06

(54) **Dispositif d'essuie-glace à amortisseur d'angle notamment pour véhicule automobile**
Scheibenwischer mit Drehdämpfer, insbesondere für Kraftfahrzeuge
Windscreen wiper with rotation damper, especially for motorvehicles

(30) Priorité: 17.12.1992 FR 9215245
(43) Date de publication de la demande: 22.06.1994
(73) Titulaire: VALEO SYSTEMES D'ESSUYAGE, 78321 La Verrière (FR)
(72) Inventeur: Vacca, Frédéric, F-78910 Bejhoust (FR)
(74) Mandataire: Gamonal, Didier

(56) Documents cités:
- EP-A- 0 491 603
- EP-A- 0 498 949
- WO-A-91/00203
- PATENT ABSTRACTS OF JAPAN vol. 11, no. 352 (M-643)18 Novembre 1987 & JP-A-62 131 845 (NIPPON DENSO) 15 Juin 1987

## Description

La présente invention se rapporte à un dispositif d'essuie-glace à amortisseur d'angle, notamment pour véhicule automobile.

Dans les dispositifs d'essuie-glace habituels, qu'ils soient constitués d'un moteur commandant un mécanisme de transmission comportant une multiplicité de bielles et de manivelles actionnant un arbre d'entraînement pour un bras d'essuie-glace équipé d'un balai d'essuie-glace apte à frotter sur une surface vitrée, telle qu'un pare-brise de véhicule automobile, ou qu'il s'agisse d'un motoréducteur muni d'un moteur commandant un réducteur muni d'un système de réduction entraînant un embiellage actionnant un arbre de sortie commandant directement le bras et le balai d'essuie-glace ou indirectement cet ensemble bras-balai par l'intermédiaire du mécanisme de transmission précité, se pose le problème de maîtriser l'angle de balayage avec le plus de précision possible.

Comme cela est connu, l'angle de balayage de l'ensemble bras-balai d'essuie-glace, c'est-à-dire l'angle que parcourt cet ensemble d'une position extrême jusqu'à une autre position extrême, est donné soit par une disposition particulière des bielles et manivelles du mécanisme de transmission ou de l'embiellage du motoréducteur, soit par le moteur électrique lui-même.

Compte tenu, d'une part, des jeux nécessaires au fonctionnement de l'embiellage ou du mécanisme de transmission, et d'autre part, de l'inertie de l'ensemble bras-balai dans sa course de balayage, il se produit généralement un dépassement de cet angle théorique de balayage, ce qui produit un dysfonctionnement, par exemple le balai d'essuie-glace peut venir heurter un des bords de la surface à essuyer et engendrer la destruction du balai lui-même et/ou générer des bruits désagréables pour le confort de l'utilisateur.

Il a été proposé de résoudre partiellement ce problème appliqué à un dispositif motoréducteur comme cela est mieux décrit dans le document DE-A-3 740 312 publié le 8 juin 1989, et dans lequel il est prévu un amortisseur d'angle entre une partie fixe de ce motoréducteur et une partie mobile de l'embiellage que présente celui-ci, tel que l'arbre de sortie de ce motoréducteur.

Bien que donnant satisfaction, il a été constaté que cet amortisseur entraînait un encombrement radial plus important au niveau de la liaison de l'arbre concerné et nécessitait des aménagements spécifiques pour chaque type de motoréducteur.

En effet, une matière élastomère est interposée entre un doigt que porte la manivelle de l'embiellage et le fond d'une rainure sensiblement semi-circulaire que présente la partie fixe du carter, cette rainure étant concentrique à l'arbre.

Ces aménagements sont très élaborés, très difficiles à réaliser et nécessitent, lors du montage, un assemblage très précis et minutieux ce qui en finalité grève le prix de revient d'un tel produit.

La Demanderesse se propose de rémédier aux inconvénients précités en élaborant un dispositif d'essuie-glace à amortisseur d'angle pouvant être indifféremment appliqué, soit à un motoréducteur et en particulier à son embiellage, soit à un mécanisme de transmission en particulier à l'arbre d'entraînement de ce mécanisme.

Selon l'invention, un dispositif d'essuie-glace, notamment pour véhicule automobile comprenant un arbre commandant au moins un bras et un balais d'essuie-glace, ledit arbre étant supporté par un élément fixe tout en étant mobile en rotation alternative autour d'un axe entre deux positions extrêmes, et un dispositif amortisseur d'angle destiné à freiner ledit arbre lorsqu'il atteint l'une ou l'autre de ses positions extrêmes, ledit dispositif amortisseur étant interposé entre l'élément fixe et ledit arbre (Dispositif tel que celui divulgué dans DE-A-3 740 312), est caractérisé en ce que le dispositif amortisseur comporte un moyen élastique à compression axiale selon l'axe dudit arbre et un moyen d'actionnement axial entraîné en rotation par l'arbre pour comprimer le moyen élastique contre l'élément fixe lorsque l'arbre atteint l'une ou l'autre de ses positions extrêmes.

Grâce à cette disposition, et du fait que le moyen élastique est à compression axiale, l'encombrement radial du dispositif d'essuie-glace n'est pas augmenté. Divers modes de réalisation de l'invention sont spécifiés dans les revendications 2 à 19 dépendantes.

Les autres caractéristiques et avantages de l'invention vont ressortir maintenent de la description qui va suivre en se référant aux dessins annexés sur lesquels :
- la figure 1 est une vue en élévation avec coupe partielle d'un motoréducteur sur lequel est appliquée l'invention ;
- la figure 2 est une vue en coupe selon la ligne AA de la figure 1 ;
- les figures 3 et 4 sont des vues en perspective montrant chacune un détail de l'invention ;
- la figure 5 est une vue en coupe correspondant sensiblement à la ligne AA de la figure 1 et montrant une première variante de l'invention ;
- la figure 6 est une vue en coupe passant par la ligne AA de la figure 1 et montrant une deuxième variante de l'invention ;
- les figures 7, 8 et 9 montrent un détail de réalisation de l'invention appliqué aux figures 6 et 7.

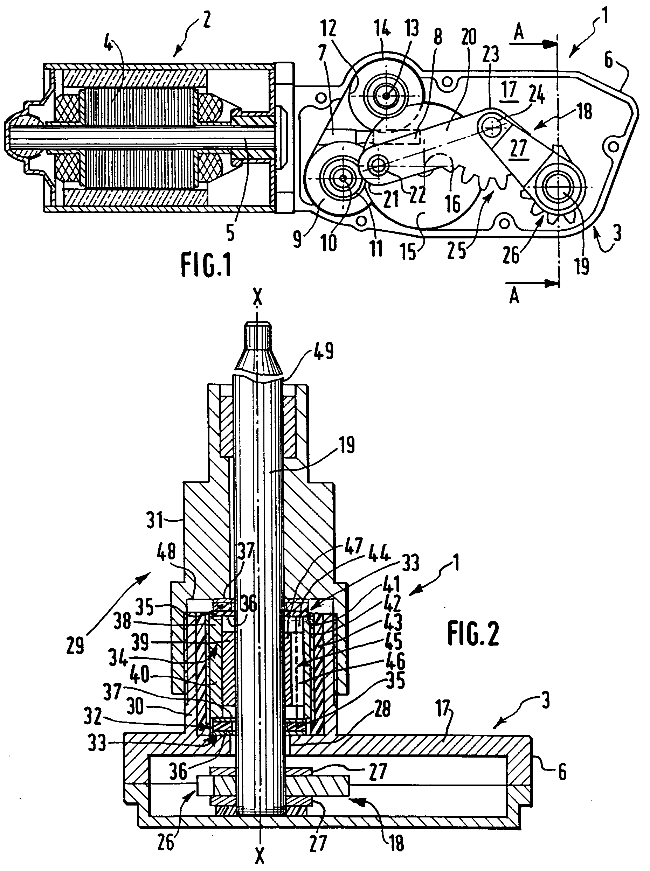

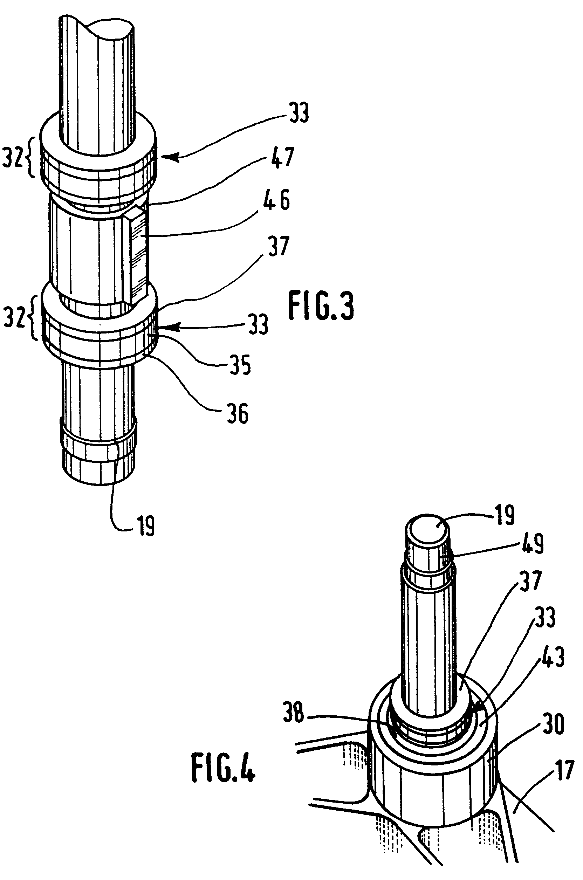

En se référant aux figures 1 et 2 qui montrent un exemple de réalisation auquel est appliquée la présente invention, exemple consistant ici en un motoréducteur mais qui peut , et cela sans sortir du cadre de l'invention, être appliqué à un mécanisme de transmission tel que mentionné précédemment.

Sur ces figures, le motoréducteur 1 est composé d'un moteur électrique 2 associé à un réducteur 3.

Le moteur électrique 2 comprend un rotor 4 dont l'arbre du rotor 5 se prolonge à l'intérieur d'un carter 6 du réducteur 3 apte à recevoir le dispositif réducteur.

L'arbre 5 porte deux vis sans fin 7, 8 taillées en bout de l'arbre 5 et adjacentes l'une de l'autre.

Avec la vis sans fin 7 coopère un pignon primaire 9 ayant un axe 10 perpendiculaire à l'axe général de l'arbre du rotor 5. Ce pignon porte concentriquement et solidairement, un pignon secondaire 11 de plus petit diamètre.

Avec la vis sans fin 8 coopère un pignon primaire 12 ayant un axe 13 sensiblement parallèle à l'axe 10, ce pignon 12 portant, concentriquement et solidairement, un pignon secondaire 14 de diamètre inférieur.

Les diamètres des pignons primaires sont identiques ainsi que les diamètres des pignons secondaires et les axes 10, 13 sont disposés de part et d'autre de l'axe de l'arbre 5 en étant à la même distance de celui-ci.

Les pignons secondaires 11, 14 engrènent avec une roue dentée 15 ayant un axe de rotation 16 sensiblement parallèle aux axes 10, 13.

De manière pratique, les axes 10, 13, 16 sont portés par une partie fixe, ici le fond 17 du carter, en permettant la rotation de ces pignons et de cette roue dentée et l'arbre 5 avec ses vis 7, 8 associées aux pignons 9, 11, 12, 14 combinés à la roue 15 forment un système de réduction.

La roue dentée 15 est apte à actionner un mécanisme d'inversion de sens, ici un embiellage 18 permettant d'inverser le sens de rotation d'un arbre de sortie 19 d'axe XX sensiblement parallèle aux axes des pignons et de la roue et que porte une partie fixe 17 du carter 6 et particulièrement le fond de celui-ci, de manière à obtenir un mouvement de rotation alternatif de cet arbre.

Le mécanisme d'inversion de sens 18 est constitué d'un bras 20 lié à rotation par l'une de ses extrémités 21 à la roue dentée 15 par un pion 22 disposé de manière excentrée par rapport à l'axe 16 de la roue tout en étant parallèle à celui-ci.

L'autre extrémité 23 du bras 20 porte un axe 24 et, concentriquement audit axe, un secteur denté 25 apte à se débattre autour de l'axe 24.

Ce secteur denté 25 est apte à engréner avec un secteur denté 26 porté de manière concentrique et solidaire par l'arbre de sortie 19.

L'arbre de sortie 19 est relié à l'axe 25 par deux flasques 27 situés de part et d'autre des secteurs dentés 25, 26. Ces flasques sont libres en rotation autour de l'arbre de sortie 19 alors que l'axe 25 est monté fixe en rotation sur lesdits flasques de manière à pouvoir autoriser une oscillation du bras 21 autour de l'axe 25.

L'arbre 19 traverse, de manière sensiblement perpendiculaire, le fond 17 du carter 6 par une ouverture 28 que présente celui-ci, cet arbre traversant un fût 29 de forme tubulaire et concentrique à l'ouverture 28 que porte le fond 17.

Le fût 29 est constitué de deux parties, une première partie, dite socle 30 de plus grand diamètre intérieur que le diamètre de l'ouverture 28 et une deuxième partie, dite capuchon 31, venant coiffer le socle en étant vissée sur celui-ci.

Comme visible sur la figure 2, le socle 30 est apte à recevoir un amortisseur d'angle 32 interposé entre la partie fixe que constituent le fond 17 et le socle 30 et l'arbre 19 qui est mobile en rotation autour de son axe XX par l'intermédiaire d'un moyen de commande, constitué ici par le systèmede réduction et l'embiellage.

Le socle 30 se présente sous la forme d'une partie tubulaire concentrique à l'axe XX de l'arbre 19 en prenant naissance à partir du fond 17 et en étant, de manière préférentielle, monobloc avec celui-ci, la partie du fond 17 du carter 6 servant de fond au socle 30.

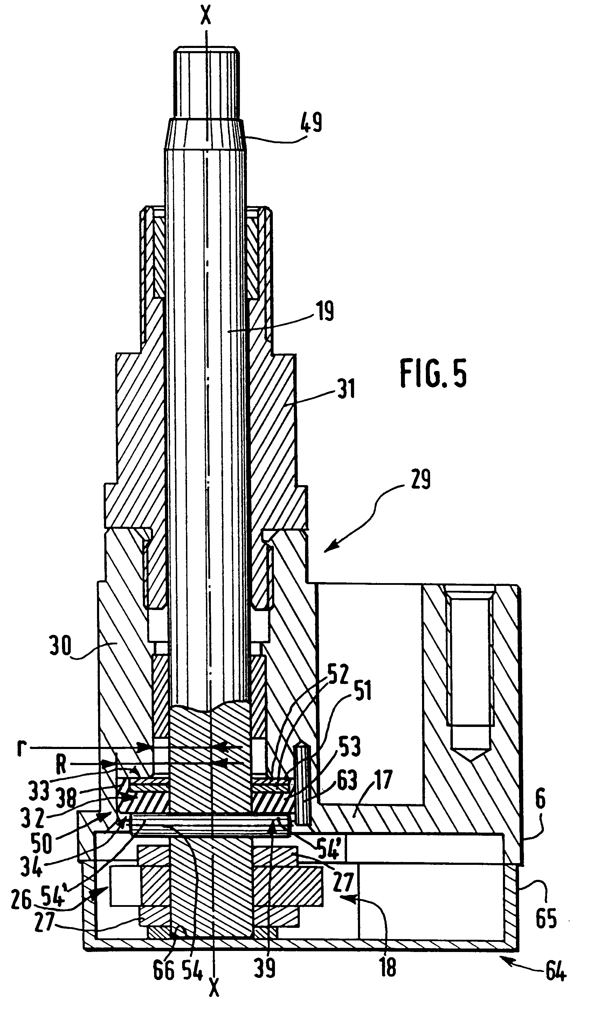

En se référant en plus aux figures 3 et 4, le dispositif amortisseur d'angle 32 est logé à l'intérieur du volume creux que présente cette partie tubulaire.

Cet amortisseur d'angle est constitué d'un moyen élastique 33 soumis à un moyen d'actionnement axial 34 tous deux disposés concentriquement à l'arbre 19.

Le moyen élastique 33 est représenté dans l'exemple par une rondelle en élastomère 35, par exemple du type néoprène, et il peut être envisagé que tout autre moyen élastique puisse être utilisé, notamment des moyens élastiques mécaniques tels que des rondelles Belleville.

Cette rondelle élastique 35 est emprisonnée entre deux rondelles d'appui 36, 37 dont la rondelle d'appui inférieure 36 s'appuie sur le fond 17 du carter 3 et dont la rondelle d'appui supérieure 37 est soumise au moyen d'actionnement axial 34.

Le moyen d'actionnement axial 34 est constitué d'un élément presseur 38 commandé par un entraîneur 39.

L'élément presseur 38 est constitué d'un fourreau 40 disposé concentriquement à l'axe XX et en étant sensiblement de même diamètre que le diamètre de la rondelle élastique 35 et comporte un filetage extérieur 41 coopérant avec un filetage intérieur 42 d'un guide fixe 43 qui est emmanché à force à l'intérieur du socle 30.

En outre, la périphérie interne du fourreau 40 présente un logement 44, ici en forme de rainure axiale sensiblement parallèle à l'axe XX de l'arbre 19, ce logement servant à la réception d'un organe de commande 45 issu de l'entraîneur 39.

A titre d'exemple l'organe de commande 45 est constitué par une clavette 46 montée de manière fixe sur une bague 47 qui est elle-même montée de manière fixe sur l'arbre 19 et cela de manière concentrique, la clavette et la bague formant l'entraîneur.

En plus, un deuxième moyen élastique 33 est monté à l'autre extrémité du moyen d'actionnement axial 34 en étant interposé entre celui-ci et une surface d'appui fixe 48 que présente le capuchon 31.

Pour la réalisation du dispositif d'essuie-glace selon l'invention, on amène dans une premier temps la rondelle élastique 35 emprisonnée entre les rondelles d'appui 36,37 au fond du socle 30 de manière à ce que la rondelle 36 prenne appui sur le fond 17, c'est-à-dire sur le fond du socle 30, puis, l'arbre de sortie 19 et son moyen de commande, constitué ici par l'inverseur de sens 18 et les différentes roues dentées, est introduit à travers l'ouverture 28 que présente le fond 17 et les rondelles 35, 36, 37 de manière à ce que l'extrémité libre 49 de cet arbre fasse saillie au-delà du socle 30.

L'entraîneur 39 constitué de la bague 47 et de la clavette 46 est emmanché par l'extrémité libre 49 de l'arbre 19 de façon à la situer à peu près à mi-distance entre le fond 17 et l'extrémité libre du socle 30, celui opposé au fond 17.

Après avoir, au préalable, constitué une cartouche formée par l'élément presseur 38 et le guide fixe 43, par vissage de l'un des éléments dans l'autre des éléments, cette cartouche est montée à force dans le socle 30 en faisant coopérer le logement 44 que présente l'élément presseur 38 avec l'organe de commande 45 que porte l'entraîneur 39.

Puis, une seconde rondelle élastique 35, emprisonnée entre deux rondelles d'appui 36, 37, est montée au contact de la partie terminale opposée au fond 17 de l'élément presseur 38 puis dans une ultime étape le capuchon 31 est rapporté par vissage sur le socle 30 de manière à ce que la surface d'appui 48 que présente celui-ci s'appuie sur la rondelle d'appui supérieure 37 du moyen élastique 33 disposé en partie terminale de l'élément 38.

En fonctionnement, la rotation de l'arbre 5 du rotor 4 entraîne les pignons primaires 9, 12 et les pignons secondaires 11, 14 transmettent ce mouvement de rotation à la roue dentée 15. Pendant le mouvement de rotation de l'arbre 15 autour de l'arbre 16, l'axe 22 porté par cette roue est entraîné en rotation autour dudit axe de la roue.

Ce mouvement de rotation est transformé en un mouvement de rotation alternatif à l'arbre de sortie par l'action du bras 20 et la coopération des secteurs dentés 26, 27.

Pendant ce mouvement, les jeux de fonctionnement et ou dimensionnels existant entre les vis sans fin 7, 8 et les roues primaires 9, 12, entre les roues secondaires 11, 13 et la roue dentée 15, entre l'axe 22 et le logement que présente, soit le bras 20, soit la roue 15, pour permettre la rotation dudit bras autour de cet axe, entre l'axe 24 et le bras 21 et entre les secteurs dentés 25, 26 sont retransmis à l'arbre 19 ce qui peut générer une modification de l'angle de balayage de l'ensemble bras-balai d'essuie-glace monté soit directement sur l'extrémité 49 de l'arbre 19, soit indirectement par l'intermédiaire d'un mécanisme de transmission raccordé à ladite extrémité libre 49.

L'amortisseur d'angle 32 fonctionne de la manière suivante : le mouvement de rotation donné à l'arbre 19 par le mécanisme de commande constitué du mécanisme d'inversion de sens 18 et des différentes roues dentées, commande en rotation dans le même sens l'entraîneur 39 qui, à son tour, va entraîner en rotation le fourreau 40 par l'organe de commande 45.

Ce fourreau 40, sous l'impulsion de l'entraîneur 39 va se déplacer axialemement de par la coopération des filetages extérieur et intérieur et appuyer sur l'un des moyens élastiques 33.

Pour la simplification de la description, l'on va considérer, à titre d'exemple, que c'est le moyen élastique 33 s'appuyant sur le fond 17 qui est soumis à l'élément presseur.

Dans ce cas, l'extrémité inférieure du fourreau 40 va appuyer sur la rondelle supérieure 37 et comprimer la rondelle élastique 35 jusqu'à son point limite de compression. De ce fait, la rondelle élastique jouera un rôle de freinage de l'arbre puisque celui-ci est lié à l'entraîneur et éventuellement en arrivant à maîtriser la raideur de la rondelle élastique, l'on peut arriver à créer en position extrême du bras-balai une sorte de butée fixe permettant ainsi de mieux maîtriser l'angle de balayage.

Dans le parcours inverse de l'ensemble bras-balai la rondelle élastique 35 est située entre le capuchon 31 et l'extrémité du socle 30 qui sera soumise à son tour à l'effet de l'élément presseur, l'entraîneur commandant le fourreau dans le sens de rotation inverse.

Bien entendu toute la description qui précède a été faite en relation avec un arbre de sortie de motoréducteur mais ce dispositif peut facilement s'appliquer uniquement à un arbre d'entraînement que comporte une timonerie d'essuie-glace, cet arbre d'entraînement étant commandé par un système bielle-manivelle qui remplacerait dans ce cas le dispositif d'inverseur de sens 18 et les différentes roues dentées, seuls susbisteraient le socle 30 avec son fond correspondant à la paroi du fond du carter et le capuchon.

On se réfère maintenant à la figure 5 qui montre une variante de réalisation de l'invention.

Dans cette variante, l'arbre 19 traverse un lamage 50 prévue dans le fond du carter 6 pour faire saillie au-delà du socle 30 faisant partie du fût 29, ce socle 30 étant apte à recevoir un capuchon 31 au travers duquel fait saillie l'arbre 19 en permettant ainsi à l'extrémité 49 de cet arbre de pouvoir être reliée soit à un bras d'essuie-glace, soit à un mécanisme de transmission.

Comme visible sur cette figure, le lamage 50 présente un rayon interne R plus grand que le rayon interne r du volume intérieur du socle 30 en délimitant ainsi une base d'appui 51.

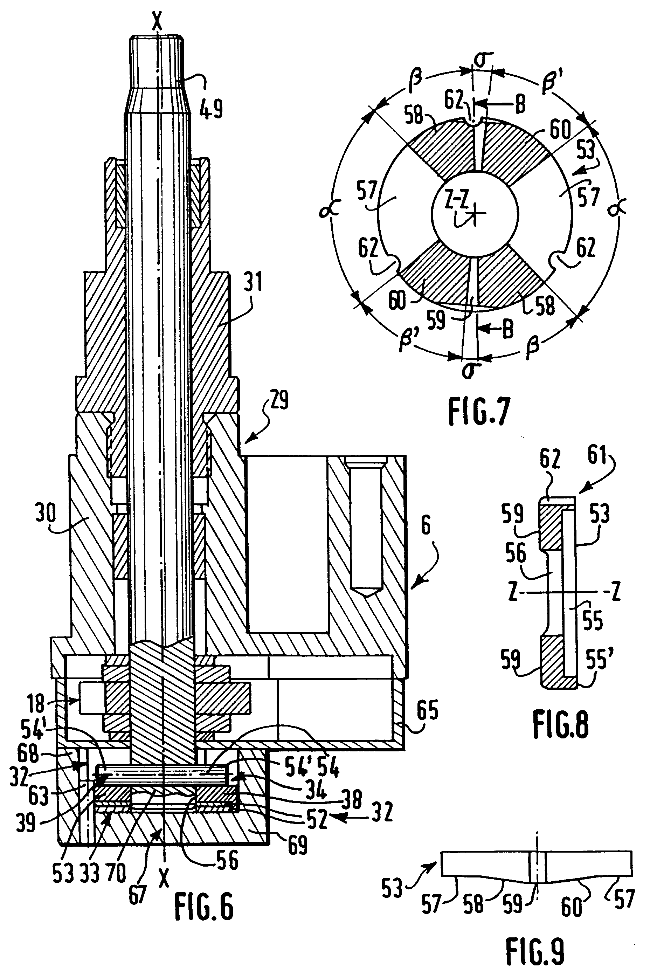

C'est entre cette base 51 et le moyen de commande constitué par le mécanisme d'inversion de sens 18 visible sur la figure 6 qu'est interposé un amortisseur d'angle 32.

Cet amortisseur d'angle est constitué d'un moyen élastique 33 à compression axiale selon l'axe XX de l'arbre, moyen élastique soumis à un moyen d'actionnement axial 34.

Le moyen élastique 33 est ici constitué par deux rondelles élastiques 52 disposées l'une sur l'autre en étant concentriques à l'axe XX de l'arbre 19 et en étant de rayon plus grand que le rayon r mais plus petit que le rayon R. Ces rondelles élastiques, du type par exemple rondelle Belleville, prennent appui pour l'une sur la base 51 et pour l'autre sur un élément presseur 38 constitué ici par une came 53.

Cette came 53 est commandée en déplacement axial selon l'axe XX par un entraîneur 39, constitué dans l'exemple de la figure 5 par des saillies radiales diamètrales opposées, ici par une une goupille 54 traversant orthogonalement l'arbre XX en faisant saillie par rapport à la périphérie externe de celui-ci en laissant subsister deux bras radiaux 54, les bras radiaux de la goupille 54 s'appuyant sur la came 53.

En se référant maintenant aux figures 7 à 9, la came se présente sous la forme d'une rondelle circulaire évidée portant un alésage central 56 et, à l'une de ses faces, un logement circulaire de réception 55 du moyen élastique 33 et pour ce faire a un rayon sensiblement identique au rayon des rondelles 52 précédemment mentionnées, ce qui laisse subsister un rebord circonférentiel 55 de hauteur au plus égale à la hauteur des rondelles 52 empilées.

En outre, sur la face opposée au logement 55 se trouvent situés, circonférentiellement à la suite les uns des autres, différents secteurs.

En se référant aux figures 7 et 9 il est prévu deux secteurs plans 57 sensiblement horizontaux et disposés diamètralement opposés l'un à l'autre par rapport à l'axe ZZ de la figure 7, ces secteurs plans étant d'étendue angulaire limitée, comme par exemple un angle α mentionné sur la figure 8.

En considérant la figure 7 et le sens horaire, chaque secteur plan 57 se poursuit par un secteur angulaire incliné 58 d'étendue angulaire β dont l'inclinaison va en s'accroissant à partir de l'extrémité du secteur angulaire plan 57 jusqu'à un secteur horizontal 59, sensiblement parallèle au secteur 57, également d'étendue angulaire limitée par un angle σ et disposé de manière diamétralement opposée, ce secteur horizontal 59 se poursuivant par un autre secteur incliné 60 d'étendue angulaire β' prenant naissance à la fin du secteur angulaire horizontal 59 et se terminant au niveau du secteur plan 57 en ayant une pente décroissante à partir du secteur horizontal 59 jusqu'aux secteurs plans 57, ces secteurs 60 étant également situés de part et d'autre de l'axe ZZ.

En outre, la came 53 est apte à porter des moyens d'immobilisation en rotation 61 et qui, dans le cas des figures concernées, consistent en des rainures axiales 62 disposées à équidistance l'une de l'autre et cela sur la périphérie externe de la rondelle 53.

Pour réaliser le dispositif d'essuie-glace figurant sur la figure 5, l'on dispose, dans un premier temps, les rondelles élastiques 52 dans le logement de réception 55 de la came 53, puis le sous-ensemble rondelles élastiques-came est introduit dans le lamage 50 prévue dans le fond du carter 17 de manière à ce que l'une des rondelles élastiques 52 s'appuie sur la base 51 définie précédemment, puis une butée en rotation 63 est introduite dans les moyens d'immobilisation 61, ces butées en rotation consistant ici en des piges disposées sensiblement parallèlement à l'axe XX. Une fois cette opération réalisée, l'arbre de sortie 19, préalablement équipé de sa goupille transversale 54, est introduit à travers l'alésage central de la came 53 et les évidements centraux des rondelles élastiques 52 pour déboucher au-delà du fût 29. Dans une ultime étape, une butée en translation axiale immobilise en déplacement, selon l'axe XX, l'arbre 19 le long de ce fût, cette butée en translation axiale 64 consistant ici en un couvercle 65 venant recouvrir la face ouverte du carter 6 en prenant appui sur la partie terminale inférieure 66 de l'arbre 19.

En fonctionnement et en se référant à la figure 5, les bras 54' de la goupille 54 prennent appui sur les secteurs horizontaux 59, ce qui correspond à la position repos du dispositif d'essuie-glace et à la compression terminale souhaitée du moyen élastique 33.

Lors d'un mouvement en rotation considéré dans le sens horaire de l'arbre 19 sous l'impulsion de l'embiellage 18, chaque bras de la goupille 54 va quitter les secteurs horizontaux 59, glisser sur les secteurs inclinés 60 pour aboutir dans la zone du secteur plan 57. Pendant ce mouvement, la came 53 a subi un déplacement axial résultant du contact de la goupille 54 avec les secteurs considérés, déplacement axial considéré vers le bas au regard de la figure 6 et les rondelles élastiques 52 ne sont plus comprimées. A partir du secteur plan 57 chaque bras de la goupille 54 va venir au contact des secteurs inclinés 58 en comprimant les rondelles 52 ce qui va freiner l'arbre et le dispositif d'essuie-glace qu'il porte, pour arriver en une phase terminale dans laquelle les bras de la goupille 54 prennent appui sur les secteurs horizontaux 59 en ayant comprimé à l'état désiré les rondelles élastiques 52 telles que représentées sur la figure 5.

Ainsi, il peut être constaté que, par une simple disposition d'une came et d'un moyen de commande de cette came, le moyen élastique 33 peut être actionné d'une manière très simple et procurer en plus une butée mécanique à la rotation de l'arbre 19.

On se réfère maintenant à la figure 6 qui montre une autre variante de l'invention dans laquelle l'amortisseur d'angle 32 est situé à l'extérieur du dispositif d'essuie-glace.

Pour réaliser cela, il est prévu que cet amortisseur d'angle soit reçu dans un boîtier 67 porté de manière fixe par une partie fixe du carter 6 et en particulier par le couvercle 65 que présente celui-ci.

Comme visible sur cette figure, ce boîtier se présente sous la forme d'un boîtier circulaire à paroi latérale 68 sensiblement parallèle à l'axe XX de l'arbre 19 et d'un fond 69 situé à distance du couvercle 65 en étant sensiblement orthogonal audit axe XX.

Le boîtier 67 est apte à recevoir des moyens élastiques 33 ici constitués par deux rondelles élastiques 52 du type Belleville superposées l'une sur l'autre dont l'une prend appui sur le fond 69 du boîtier 67 et la came 53 qui s'appuie sur l'autre rondelle élastique. Cette came a un diamètre extérieur sensiblement égal au diamètre intérieur du boîtier 67 tout en étant immobilisé en rotation autour de l'axe XX par les butées en rotation 63.

L'arbre 19 se poursuit par un prolongement 70 faisant saillie au-delà du couvercle 65 et pénétrant de manière coaxiale dans le boîtier 67 de façon à venir traverser l'alésage central 56 de la came 53 et les ouvertures centrales des rondelles élastiques 52, ce prolongement étant équipé d'une goupille 54 transversalement par rapport à l'axe XX, cette goupille s'appuyant, par ses bras radiaux, sur la came 53 qui comporte les mêmes secteurs angulaires que ceux décrits en relation avec la figure 6.

Il suffit de rapporter le boîtier équipé du moyen élastique et du moyen d'actionnement axial pour procurer, à ce mécanisme d'essuyage, un amortisseur d'angle, le fonctionnement de cette variante étant identique à celui décrit en relation avec la figure 5.

Grâce à cette variante, le dispositif d'essuie-glace est équipé, par un amortisseur d'angle, après montage complet du mécanisme formé par le moteur électrique et le réducteur, cet amortisseur d'angle formant un module.

Bien entendu, et cela sans sortir du cadre de l'invention, le boîtier 67 peut être prévu monobloc avec le couvercle 65 ou être fixé à celui-ci par tout moyen approprié tel que par vissage, sertissage ou être supporté par une autre partie fixe avoisinant ce motoréducteur.

De plus, l'entraîneur 39 réalisé par la goupille 54 peut être réalisé par tout autre moyen tel qu'un emboutissage de l'arbre 19 permettant de réaliser deux saillies radiales.

De même, les moyens d'immobilisation 61 en rotation de la came 53 peuvent être réalisés par tout autre dispositif et en particulier il peut être prévu que la rondelle 53 présente une forme non circulaire correspondant avec une forme complémentaire non circulaire du lamage ou du boîtier apte à recevoir cette rondelle.

La présente invention n'est pas limitée aux exemples de réalisations décrits mais englobe toutes variantes.

Notamment, il peut être prévu que les amortisseurs d'angle 32 soient utilisés en relation uniquement avec une timonerie d'essuie-glace. Dans ce cas, l'arbre 49 est commandé en rotation alternative par un système de bielles-manivelle, dont l'une des bielles est reliée directement à l'extrémité de l'arbre 19, le fût 29 correspondrait à un palier d'essuyage recevant de manière habituelle ledit arbre et la partie fixe serait soit une éminence émanant de ce palier, soit le palier lui-même.

## Revendications

1. Dispositif d'essuie-glace, notamment pour véhicule automobile comprenant un arbre (19) commandant au moins un bras et un balais d'essuie-glace, ledit arbre étant supporté par un élément fixe (17,30) tout en étant mobile en rotation alternative autour d'un axe (XX) entre deux positions extrêmes, et un dispositif amortisseur d'angle (32) destiné à freiner ledit arbre (19) lorsqu'il atteint l'une ou l'autre de ses positions extrêmes, ledit dispositif amortisseur étant interposé entre l'élément fixe (17,30) et ledit arbre, caractérisé en ce que le dispositif amortisseur (32) comporte un moyen élastique (33) à compression axiale selon l'axe (XX) dudit arbre et un moyen d'actionnement axial (34) entraîné en rotation par l'arbre (19) pour comprimer le moyen élastique (33) contre l'élément fixe (17, 30) lorsque l'arbre atteint l'une ou l'autre de ses positions extrêmes.

2. Dispositif d'essuie-glace selon la revendication 1, caractérisé en ce que le moyen élastique est au moins une rondelle (35) en matière élastomère.

3. Dispositif d'essuie-glace selon la revendication 1, caractérisé en ce que le moyen élastique (33) est au moins une rondelle métallique élastique (52).

4. Dispositif d'essuie-glace selon la revendication 1, caractérisé en ce que le moyen d'actionnement axial (34) comporte un élément presseur (38) commandé par un entraîneur (39) porté par l'arbre (19).

5. Dispositif d'essuie-glace selon la revendication 4, caractérisé en ce que l'élément presseur (38) est un fourreau (40) coulissant axialement le long de l'arbre (19).

6. Dispositif d'essuie-glace selon l'une des revendications 4 ou 5, caractérisé en ce que le fourreau (40) est commandé en translation axiale par un organe de commande (45) porté par l'entraîneur (39).

7. Dispositif d'essuie-glace selon la revendication 6, caractérisé en ce que l'organe de commande (45) consiste en une clavette (46) liée de manière fixe en rotation avec l'arbre (19).

8. Dispositif d'essuie-glace selon l'une des revendications 5 à 7, caractérisé en ce que le fourreau (40) présente un filetage extérieur (41) coopérant avec la partie fixe (43).

9. Dispositif d'essuie-glace selon la revendication 4, caractérisé en ce que l'élément presseur (38) est une came (53) en forme de rondelle déplaçable axialement le long de l'axe (XX) de l'arbre (19).

10. Dispositif d'essuie-glace selon la revendication 9, caractérisé en ce que la came (53) porte une multiplicité de secteurs angulaires (57,58,59,60).

11. Dispositif d'essuie-glace selon la revendication 10, caractérisé en ce que les secteurs angulaires (58,60) sont des secteurs inclinés.

12. Dispositif d'essuie-glace selon l'une des revendications 10 ou 11, caractérisé en ce que les secteurs angulaires (57,59) sont plans.

13. Dispositif d'essuie-glace selon l'une des revendications 10 à 12, caractérisé en ce que les secteurs (57) sont situés dans un plan différent des secteurs (59).

14. Dispositif d'essuie-glace selon l'une des revendications 9 à 13, caractérisé en ce que la came (53) porte des moyens d'immobilisation en rotation (61).

15. Dispositif d'essuie-glace selon la revendication 14, caractérisé en ce que les moyens d'immobilisation consistent en une butée en rotation (63) coopérant avec des rainures axiales (62) portées par la came (53).

16. Dispositif d'essuie-glace selon l'une des revendications 9 à 15, caractérisé en ce que l'entraîneur (39) consiste en au moins une protubérance saillante (54') radialement par rapport à l'axe (XX).

17. Dispositif d'essuie-glace selon la revendication 16, caractérisé en ce que la protubérance est réalisée par une goupille (54) traversant orthogonalement l'arbre (19).

18. Dispositif d'essuie-glace selon l'une des revendications précédentes, caractérisé en ce que l'amortisseur d'angle (32) est porté par un boîtier (67).

19. Dispositif d'essuie-glace selon la revendication 18, caractérisé en ce que le boîtier (67) est monobloc avec la partie fixe (17,65) qui le porte.

## Claims

1. A windshield wiper device, in particular for a motor vehicle, comprising a shaft (19) controlling at least one arm and a windshield wiper brush, the said shaft being supported by a fixed element (17, 30) whilst rotating alternately around an axis (XX) between two extreme positions, and an angle damping device (32) intended to brake the said shaft (19) when it reaches the one or the other of its extreme positions, the said damping device being placed between the fixed element (17, 30) and the said shaft,
**characterised in that** the damping device (32) comprises an elastic means (33) which is subject to axial compression along the axis (XX) of said shaft and an axial drive means (34) rotationally driven by the shaft (19) to compress the elastic means (33) against the fixed element (17, 30) when the shaft reaches the one or the other of its extreme positions.

2. A windshield wiper device according to Claim 1,
**characterised in that** the elastic means are at least one washer (35) made from elastomeric material.

3. A windshield wiper device according to Claim 1,
**characterised in that** the elastic means (33) are at least one elastic metal washer (52).

4. A windshield wiper device according to Claim 1,
**characterised in that** the axial drive means (34) comprise a pressure element (38) controlled by a driving device (39) carried by the shaft (19).

5. A windshield wiper device according to Claim 4,
**characterised in that** the pressure element (38) is a sleeve (40) axially sliding along the shaft (19).

6. A windshield wiper device according to one of Claims 4 or 5,
**characterised in that** the sleeve (40) is driven in axial translation by a control member (45) carried by the driving device (39).

7. A windshield wiper device according to Claim 6,
**characterised in that** the control member (45) consists of a key (46) connected in a rotationally fixed manner to the shaft (19).

8. A windshield wiper device according to one of Claims 5 to 7,
**characterised in that** the sleeve (40) has an external thread (41) cooperating with the fixed part (43).

9. A windshield wiper device according to Claim 4,
**characterised in that** the pressure element (38) is a cam (53) in the form of a washer which can move axially along the axis (XX) of the shaft (19).

10. A windshield wiper device according to Claim 9,
**characterised in that** the cam (53) carries a variety of angular sectors (57, 58, 59, 60).

11. A windshield wiper device according to Claim 10,
**characterised in that** the angular sectors (58, 60) are inclined sectors.

12. A windshield wiper device according to one of Claims 10 or 11,
**characterised in that** the angular sectors (57, 59) are plane.

13. A windshield wiper device according to one of Claims 10 to 12,
**characterised in that** the sectors (57) are situated in a different plane to sectors (59).

14. A windshield wiper device according to one of Claims 9 to 13,
**characterised in that** the cam (53) carries rotational immobilisation means (61).

15. A windshield wiper device according to Claim 14,
**characterised in that** the immobilisation means consist of a rotational stop (63) cooperating with axial grooves (62) carried by the cam (53).

16. A windshield wiper device according to one of Claims 9 to 15,
**characterised in that** the driving device (39) consists of at least one projection (54') extending radially in relation to the axis (XX).

17. A windshield wiper device according to Claim 16,
**characterised in that** the projection is created by a pin (54) passing orthogonally through the shaft (19).

18. A windshield wiper device according to one of the preceding Claims,
**characterised in that** the angle damper (32) is carried by a housing (67).

19. A windshield wiper device according to Claim 18,
**characterised in that** the housing (67) consists of one piece with the fixed part (17, 65) which carries it.

## Patentansprüche

1. Scheibenwischer, insbesondere für Kraftfahrzeuge, der eine Welle (19) zum Antrieb wenigstens eines Scheibenwischerarms und eines Wischergummis umfaßt, wobei die besagte Welle an einem ortsfesten Element (17, 30) gehaltert ist, während sie gleichzeitig in einer Pendeldrehbewegung um eine Achse (XX) zwischen zwei Endpositionen beweglich ist, und eine Winkeldämpfervorrichtung (32), um die besagte Welle (19) abzubremsen, wenn sie eine ihrer beiden Endpositionen erreicht, wobei die besagte Dämpfervorrichtung zwischen dem ortsfesten Element (17, 30) und der besagten Welle eingefügt ist, **dadurch gekennzeichnet,** daß die Dämpfervorrichtung (32) ein entlang der Achse (XX) der besagten Welle axial zusammendrückbares elastisches Mittel (33) und ein axiales Betätigungsmittel (34) umfaßt, das drehend durch die Welle (10) angetrieben wird, um das elastische Mittel (33) an dem feststehenen Element (17, 30) zusammenzudrücken, wenn die Welle eine ihrer beiden Endpositionen erreicht.

2. Scheibenwischer nach Anspruch 1, **dadurch gekennzeichnet,** daß das elastische Mittel mindestens eine Scheibe (35) aus Elastomermaterial ist.

3. Scheibenwischer nach Anspruch 1, **dadurch gekennzeichnet,** daß das elastische Mittel (33) mindestens eine Metallfederscheibe (52) ist.

4. Scheibenwischer nach Anspruch 1, **dadurch gekennzeichnet,** daß das axiale Betätigungsmittel (34) ein Anpreßelement (38) umfaßt, das durch einen an der Welle (19) angebrachten Mitnehmer (39) angetrieben wird.

5. Scheibenwischer nach Anspruch 4, **dadurch gekennzeichnet,** daß das Anpreßelement (38) eine Hülse (40) ist, die entlang der Welle (19) axial gleitend gelagert ist.

6. Scheibenwischer nach einem der Ansprüche 4 oder 5, **dadurch gekennzeichnet,** daß die Hülse (40) durch ein am Mitnehmer (39) angebrachtes Antriebsorgan (45) in axialer Verschiebung angetrieben wird.

7. Scheibenwischer nach Anspruch 6, **dadurch gekennzeichnet,** daß das Antriebsorgan (45) aus einem Keil (46) besteht, der drehfest mit der Welle (19) verbunden ist.

8. Scheibenwischer nach einem der Ansprüche 5 bis 7, **dadurch gekennzeichnet,** daß die Hülse (40) ein Außengewinde (41) aufweist, das mit dem ortsfesten Teil (43) zusammenwirkt.

9. Scheibenwischer nach Anspruch 4, **dadurch gekennzeichnet,** daß das Anpreßelement (38) ein Nocken (53) in Form einer entlang der Achse (XX) der Welle (19) axial verschiebbaren Scheibe ist.

10. Scheibenwischer nach Anspruch 9, **dadurch gekennzeichnet,** daß der Nocken (53) eine Mehrzahl von Winkelsegmenten (57, 58, 59, 60) trägt.

11. Scheibenwischer nach Anspruch 10, **dadurch gekennzeichnet**, daß die Winkelsegmente (58, 60) geneigte Segmente sind.

12. Scheibenwischer nach einem der Ansprüche 10 oder 11, **dadurch gekennzeichnet,** daß die Winkelsegmente (57, 59) eben sind.

13. Scheibenwischer nach einem der Ansprüche 10 bis 12, **dadurch gekennzeichnet,** daß die Segmente (57) in einer anderen Ebene als die Segmente (59) angeordnet sind.

14. Scheibenwischer nach einem der Ansprüche 9 bis 13, **dadurch gekennzeichnet,** daß der Nocken (53) Drehsicherungsmittel (61) trägt.

15. Scheibenwischer nach Anspruch 14, **dadurch gekennzeichnet,** daß die Sicherungsmittel aus einem Drehanschlag (63) bestehen, der mit axialen Nuten (62) zusammenwirkt, die in den Nocken (53) eingearbeitet sind.

16. Scheibenwischer nach einem der Ansprüche 9 bis 15, **dadurch gekennzeichnet,** daß der Mitnehmer (39) aus mindestens einer im Verhältnis zur Achse (XX) radial vorspringenden Ausstülpung (54') besteht.

17. Scheibenwischer nach Anspruch 16, **dadurch gekennzeichnet,** daß die Ausstülpung durch einen Stift (54) gebildet wird, der rechtwinklig durch die Welle (19) hindurchgeht.

18. Scheibenwischer nach einem der vorangehenden Ansprüche, **dadurch gekennzeichnet**, daß der Winkeldämpfer (32) an einem Gehäuse (67) angebracht ist.

19. Scheibenwischer nach Anspruch 18, **dadurch gekennzeichnet,** daß das Gehäuse (67) einteilig mit dem ortsfesten Teil (17, 65), an dem es angebracht ist, ausgeführt ist.
